# EUROPEAN PATENT APPLICATION

(11) **EP 3 780 691 A1**
(43) Date of publication of application: **17.02.2021**
(21) Application number: 18913650.0
(22) Date of filing: 03.04.2018
(51) Int. Cl.: H04W 16/14, H04W 72/04, H04W 72/12

(54) **BASE STATION DEVICE, TERMINAL DEVICE, WIRELESS COMMUNICATION SYSTEM, AND TRANSMISSION METHOD**

(71) Applicant: FUJITSU LIMITED, Kanagawa 211-8588 (JP)
(72) Inventor: CHEN, Hongyang, Kawasaki-shi, Kanagawa 211-8588 (JP); WU, Jianming, Kawasaki-shi, Kanagawa 211-8588 (JP)
(74) Representative: Haseltine Lake Kempner LLP
(86) International application number: PCT/JP2018/014336
(87) International publication number: WO 2019/193662

(57) **Abstract**

A base station device (100) included in a wireless communication system using a frequency band that does not need a license includes: a determining unit (108) configured to determine whether each of bandwidth parts is being used by another wireless communication system, the bandwidth parts included in a carrier belonging to the frequency band and having frequencies different from each other; a scheduling unit (109) configured to assign data to a bandwidth part that is determined by the determining unit (108) to be not being used by the other wireless communication system; and a transmitting unit (114, 117) configured to transmit a signal of the bandwidth part to which the data is assigned by the scheduling unit (109).

## Description

### Field

The present invention relates to a base station device, a terminal device, a wireless communication system, and a transmission method.

### Background Art

In the current network, the traffic of mobile terminals (smartphones and feature phones) occupies a large part of resources of the network. Further, the traffic used by mobile terminals tends to expand in the future.

Furthermore, in accordance with the development of IoT (Internet of Things) services (e.g., a traffic system, a smart meter or a monitoring system for a device, etc.), there is a need to deal with services having various request conditions. Therefore, the communication standard of the fifth-generation mobile communication (5G or NR (New Radio)) demands the technology to achieve a higher data rate, a larger capacity, and a lower delay in addition to the standard technologies (for example, Non Patent Literatures 1 to 11) of 4G (the fourth-generation mobile communication). Furthermore, the 3GPP working group (e.g., TSG-RAN WG1 or TSG-RAN WG2) has undergone technological study with regard to the fifth-generation communication standard (Non Patent Literatures 12 to 39).

As described above, in order to cope with a wide variety of services, 5G assumes the support for many use cases that are classified into eMBB (Enhanced Mobile BroadBand), Massive MTC (Machine Type Communications), and URLLC (Ultra-Reliable and Low Latency Communication).

As for the 5G carriers used in these use cases, consideration has been given to the one having a high-frequency band including, for example, millimeter waves or the one having a frequency bandwidth such as a broadband of 100 MHz to 1 GHz, etc. When such a broadband carrier is used, it is considered that one carrier is divided into a plurality of bandwidth parts (BWP: Bandwidth Part) and each BWP is assigned to a terminal device, for example, so as to perform a wireless communication.

### Citation List

### Patent Literature

Patent Literature 1: Japanese Laid-open Patent Publication No. 2017-063326
Patent Literature 2: International Publication Pamphlet No. 2015/174437

### Non-Patent Literature

Non Patent Literature 1: 3GPP TS 36.211 V15.0.0 (2017-12)
Non Patent Literature 2: 3GPP TS 36.212 V15.0.1 (2018-01)
Non Patent Literature 3: 3GPP TS 36.213 V15.0.0 (2017-12)
Non Patent Literature 4: 3GPP TS 36.300 V15.0.0 (2017-12)
Non Patent Literature 5: 3GPP TS 36.321 V15.0.0 (2017-12)
Non Patent Literature 6: 3GPP TS 36.322 V15.0.0 (2017-12)
Non Patent Literature 7: 3GPP TS 36.323 V14.5.0 (2017-12)
Non Patent Literature 8: 3GPP TS 36.331 V15.0.1 (2018-01)
Non Patent Literature 9: 3GPP TS 36.413 V15.0.0 (2017-12)
Non Patent Literature 10: 3GPP TS 36.423 V15.0.0 (2017-12)
Non Patent Literature 11: 3GPP TS 36.425 V14.0.0 (2017-03)
Non Patent Literature 12: 3GPP TS 37.340 V15.0.0 (2017-12)
Non Patent Literature 13: 3GPP TS 38.201 V15.0.0 (2017-12)
Non Patent Literature 14: 3GPP TS 38.202 V15.0.0 (2017-12)
Non Patent Literature 15: 3GPP TS 38.211 V15.0.0 (2017-12)
Non Patent Literature 16: 3GPP TS 38.212 V15.0.0 (2017-12)
Non Patent Literature 17: 3GPP TS 38.213 V15.0.0 (2017-12)
Non Patent Literature 18: 3GPP TS 38.214 V15.0.0 (2017-12)
Non Patent Literature 19: 3GPP TS 38.215 V15.0.0 (2017-12)
Non Patent Literature 20: 3GPP TS 38.300 V15.0.0 (2017-12)
Non Patent Literature 21: 3GPP TS 38.321 V15.0.0 (2017-12)
Non Patent Literature 22: 3GPP TS 38.322 V15.0.0 (2017-12)
Non Patent Literature 23: 3GPP TS 38.323 V15.0.0 (2017-12)
Non Patent Literature 24: 3GPP TS 38.331 V15.0.0 (2017-12)
Non Patent Literature 25: 3GPP TS 38.401 V15.0.0 (2017-12)
Non Patent Literature 26: 3GPP TS 38.410 V0.6.0 (2017-12)
Non Patent Literature 27: 3GPP TS 38.413 V0.5.0 (2017-12)
Non Patent Literature 28: 3GPP TS 38.420 V0.5.0 (2017-12)
Non Patent Literature 29: 3GPP TS 38.423 V0.5.0 (2017-12)
Non Patent Literature 30: 3GPP TS 38.470 V15.0.0 (2018-01)
Non Patent Literature 31: 3GPP TS 38.473 V15.0.0 (2017-12)
Non Patent Literature 32: 3GPP TR 38.801 V14.0.0 (2017-04)
Non Patent Literature 33: 3GPP TR 38.802 V14.2.0 (2017-09)
Non Patent Literature 34: 3GPP TR 38.803 V14.2.0 (2017-09)
Non Patent Literature 35: 3GPP TR 38.804 V14.0.0 (2017-03)
Non Patent Literature 36: 3GPP TR 38.900 V14.3.1 (2017-07)
Non Patent Literature 37: 3GPP TR 38.912 V14.1.0 (2017-06)
Non Patent Literature 38: 3GPP TR 38.913 V14.3.0 (2017-06)
Non Patent Literature 39: "New SID on NR-based Access to Unlicensed Spectrum.", Qualcomm, 3GPP TSG RAN Meeting #75, RP-170828, March 6-9, 2017

### Summary

### Technical Problem

Furthermore, the frequency band typically used on the radio includes a licensed band that needs a license and an unlicensed band that does not need a license. The 4G has introduced, as LAA (Licensed Assisted Access), for example, the function that supplementarily uses a licensed band and uses an unlicensed band in a low frequency band, such as a 5 GHz band, for a wireless communication. The 5G system has the matter under consideration such that an unlicensed band in a high-frequency band such as a 60 GHz band is used for a wireless communication.

However, the method for efficiently using an unlicensed band in a high-frequency band has not been studied yet. Particularly, when an unlicensed band is used, it is possible to adopt the LBT (Listen Before Talk) method such as carrier sense; however, when the LBT method is adopted for a broadband carrier, there is a disadvantage such that it is difficult to efficiently use wireless resources.

Specifically, as described above, in the 5G system, one carrier is divided into a plurality of BWPs while in use; however, when carrier sense is executed on the carrier, it is determined that the entire carrier is busy when only a part of the carrier is being used by another system. As a result, all the BWPs are not used, which leads to a lost opportunity for the communication in the 5G system. Conversely, it is possible to perform the communication using the BWPs included in the carrier even when it is determined that the entire carrier is busy as a result of carrier sense; however, in this case, interference is caused by the other system in any of the BWPs, and also interference is caused to the other system.

The disclosed technique has been made in consideration of the foregoing and has an object to provide a base station device, a terminal device, a wireless communication system, and a transmission method with which it is possible to efficiently use a broadband carrier in an unlicensed band.

### Solution to Problem

According to an aspect, a base station device is included in a wireless communication system using a frequency band that does not need a license. The base station device includes: a determining unit configured to determine whether each of bandwidth parts is being used by another wireless communication system, the bandwidth parts included in a carrier belonging to the frequency band and having frequencies different from each other; a scheduling unit configured to assign data to a bandwidth part that is determined by the determining unit to be not being used by the other wireless communication system; and a transmitting unit configured to transmit a signal of the bandwidth part to which the data is assigned by the scheduling unit.

### Advantageous Effects of Invention

According to one aspect of the base station device, the terminal device, the wireless communication system, and the transmission method disclosed in the present application, there is an advantage such that it is possible to efficiently use a broadband carrier in an unlicensed band.

### Brief Description of Drawings

FIG. 1 is a block diagram illustrating a configuration of a base station device according to a first embodiment.
FIG. 2 is a diagram illustrating a specific example of a BWP.
FIG. 3 is a flowchart illustrating a transmission method according to the first embodiment.
FIG. 4 is a diagram illustrating an example of a usage situation of BWPs.
FIG. 5 is a diagram illustrating another example of the usage situation of BWPs.
FIG. 6 is a diagram illustrating further another example of the usage situation of BWPs.
FIG. 7 is a block diagram illustrating a configuration of a terminal device according to the first embodiment.
FIG. 8 is a diagram illustrating further another example of the usage situation of BWPs.
FIG. 9 is a block diagram illustrating a configuration of the base station device according to a second embodiment.
FIG. 10 is a diagram illustrating an example of switching of BWPs.
FIG. 11 is a diagram illustrating another example of switching of BWPs.

### Description of Embodiments

Embodiments of a base station device, a terminal device, a wireless communication system, and a transmission method disclosed in the present application are described below in detail with reference to the drawings. It should be noted that the present invention is not limited to the embodiments. Further, the terms used and the technical content described in this description may be replaced as appropriate with the terms and the technical content described in specifications or notes for standards regarding communications in 3GPP, etc. Examples of the specifications include the above-described Non Patent Literatures 1 to 38.

### (First Embodiment)

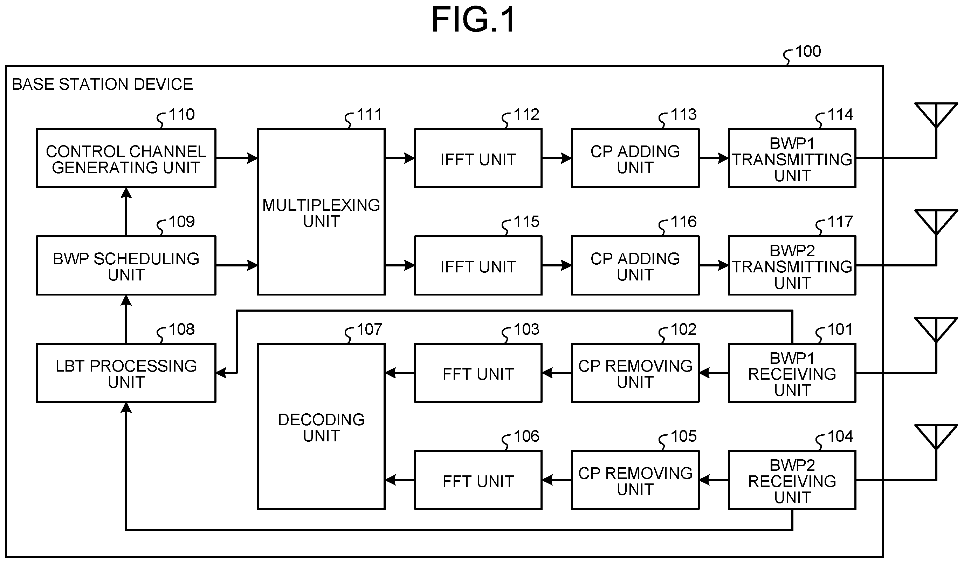

FIG. 1 is a block diagram illustrating a configuration of a base station device 100 according to a first embodiment. The base station device 100 illustrated in FIG. 1 includes a BWP1 receiving unit 101, CP (Cyclic Prefix: cyclic prefix) removing units 102, 105, FFT (Fast Fourier Transform: fast Fourier transform) units 103, 106, a BWP2 receiving unit 104, and a decoding unit 107. These processing units are processing units on the reception side of the base station device 100. The base station device 100 further includes an LBT processing unit 108, a BWP scheduling unit 109, a control channel generating unit 110, a multiplexing unit 111, IFFT (Inverse Fast Fourier Transform: inverse fast Fourier transform) units 112, 115, CP adding units 113, 116, a BWP1 transmitting unit 114, and a BWP2 transmitting unit 117. These processing units are processing units on the transmission side of the base station device 100.

Furthermore, FIG. 1 illustrates the processing units regarding the transmission and reception of an unlicensed band and omits a processing unit regarding the transmission and reception of a licensed band; however, the base station device 100 may include a processing unit regarding the transmission and reception of a licensed band. Moreover, although FIG. 1 illustrates the processing units regarding the transmission and reception of a BWP1 and a BWP2 that are two bandwidth parts (Bandwidth Part) included in a carrier of an unlicensed band, the base station device 100 may include a processing unit regarding the transmission and reception of three or more bandwidth parts.

The BWP1 receiving unit 101 receives a signal of the BWP1, which is one bandwidth part provided in the carrier of the unlicensed band. Specifically, the BWP1 receiving unit 101 receives a signal of a bandwidth part included in a carrier of an unlicensed frequency band.

The CP removing unit 102 removes the CP added to the OFDM (Orthogonal Frequency Division Multiplexing: orthogonal frequency division multiplexing) symbols from the received signal of the BWP1. Specifically, when the wireless communication of the OFDM method is performed, a CP is added to OFDM symbols, which form wireless signals, so as to prevent intersymbol interference; therefore, the CP removing unit 102 removes the CP from the received signal of the BWP1. Further, in the case described according to the present embodiment, the wireless communication of the OFDM method is performed; however, the present invention is also applicable to a case where a wireless communication of other than the OFDM method is performed. Thus, when the wireless communication of other than the OFDM method is performed, the CP removing unit 102 may be omitted.

The FFT unit 103 executes fast Fourier transform on the received signal of the BWP1 to acquire multiple subcarrier signals having frequencies orthogonal to each other. Specifically, the FFT unit 103 converts a time-domain received signal into a frequency-domain signal to acquire subcarrier signals. Moreover, as the FFT unit 103 is also a processing unit that executes a process in the case of the wireless communication of the OFDM method as is the case with the CP removing unit 102 described above, it may be omitted when the wireless communication of other than the OFDM method is performed.

The BWP2 receiving unit 104 receives a signal of the BWP2 that is one bandwidth part provided in a carrier of an unlicensed band. That is, the BWP2 receiving unit 104 receives a signal of a bandwidth part included in a carrier of an unlicensed frequency band.

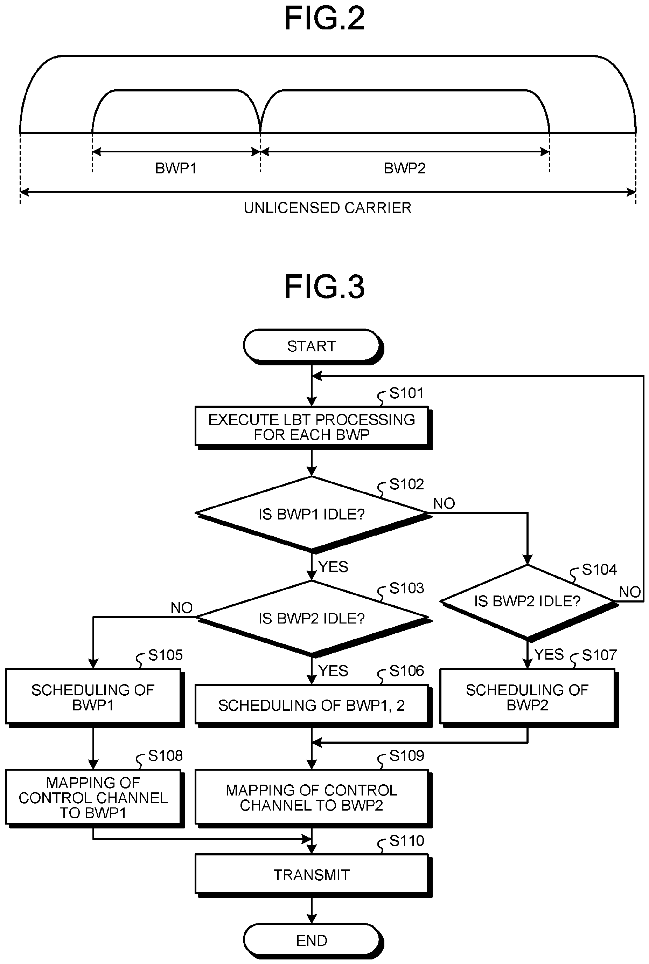

Further, it is assumed that the BWP2 is a bandwidth part having a frequency different from the BWP1 and is a bandwidth part having a boarder band than the BWP1. Specifically, as illustrated in FIG. 2, for example, the BWP1 and the BWP2 are provided in one carrier (unlicensed carrier) of the unlicensed band, and the bandwidth of the BWP2 is boarder than the bandwidth of the BWP1. Furthermore, it is assumed that the BWP1 and the BWP2 have different subcarrier intervals and symbol lengths and the subcarrier interval of the BWP2 is larger than the subcarrier interval of the BWP1. Moreover, as the subcarrier interval is inversely proportional to the symbol length, the symbol length of the BWP2 is smaller than the symbol length of the BWP1.

The CP removing unit 105 removes the CP added to the OFDM symbols from the received signal of the BWP2.

The FFT unit 106 executes fast Fourier transform on the received signal of the BWP2 to acquire multiple subcarrier signals having frequencies orthogonal to each other. Specifically, the FFT unit 106 converts a time-domain received signal into a frequency-domain signal to acquire subcarrier signals. Moreover, as the CP removing unit 105 and the FFT unit 106 are also processing units that execute a process in the case of the wireless communication of the OFDM method as is the case with the CP removing unit 102 and the FFT unit 103 described above, they may be omitted when the wireless communication of other than the OFDM method is performed.

The decoding unit 107 decodes the received signals of the BWP1 and the BWP2 to acquire decoded data.

The LBT processing unit 108 detects the received energy in each of the BWP1 and the BWP2 to determine whether the BWP1 and the BWP2 are busy or idle. Specifically, the LBT processing unit 108 executes LBT processing, such as carrier sense, on each bandwidth part in an individual cycle. More specifically, when the received energy in the BWP1 is equal to or more than a predetermined threshold, the LBT processing unit 108 determines that the BWP1 is being used by another device and is busy. Similarly, when the received energy in the BWP2 is equal to or more than a predetermined threshold, the LBT processing unit 108 determines that the BWP2 is being used by another device and is busy. Conversely, the LBT processing unit 108 determines that the BWP1 is vacant and idle when the received energy in the BWP1 is less than the predetermined threshold and determines that the BWP2 is vacant and idle when the received energy in the BWP2 is less than the predetermined threshold.

The BWP scheduling unit 109 executes scheduling of the BWP1 and the BWP2 based on the result of the LBT processing by the LBT processing unit 108. Specifically, when it is determined that the BWP1 is idle due to the LBT processing on each BWP, the BWP scheduling unit 109 determines the data to be transmitted by the BWP1. Further, when it is determined that the BWP2 is idle, the BWP scheduling unit 109 determines the data to be transmitted by the BWP2. Therefore, when it is determined that both the BWP1 and the BWP2 are idle, the BWP scheduling unit 109 determines that the data is to be transmitted by simultaneously using the two BWPs. The BWP scheduling unit 109 notifies the control channel generating unit 110 and the multiplexing unit 111 of the result of scheduling.

The control channel generating unit 110 generates the control information for identifying the data assigned to each BWP in accordance with the scheduling result of the BWP scheduling unit 109. Specifically, when the BWP1 is idle, for example, the control channel generating unit 110 generates the control information indicating the destination terminal device of the data assigned to each resource block included in the BWP1. Furthermore, when the BWP2 is idle, for example, the control channel generating unit 110 generates the control information indicating the destination terminal device of the data assigned to each resource block included in the BWP2.

The multiplexing unit 111 executes time multiplexing and frequency multiplexing of the control information and the data in the BWP1 and the BWP2 in accordance with the scheduling result of the BWP scheduling unit 109. Specifically, when only the BWP1 is idle, for example, the multiplexing unit 111 executes channel multiplexing of the control information and the data in the BWP1. Further, when only the BWP2 is idle, for example, the multiplexing unit 111 executes channel multiplexing of the control information and the data in the BWP2. Further, when both the BWP1 and the BWP2 are idle, for example, the multiplexing unit 111 executes channel multiplexing of the data in the BWP1 and the BWP2 and executes channel multiplexing of the control information on both the BWP1 and the BWP2 in the BWP having the shortest cycle of LBT processing. That is, when channel multiplexing of the data is executed in both the BWP1 and the BWP2, the multiplexing unit 111 executes channel multiplexing of the control information on the two BWPs in any one of the BWPs. Moreover, when channel multiplexing of the data is executed in three or more BWPs, too, the multiplexing unit 111 executes channel multiplexing of the control information on all the BWPs in the BWP having the shortest cycle of LBT processing.

When the multiplexing unit 111 executes channel multiplexing of the data in the BWP1, the IFFT unit 112 performs inverse fast Fourier transform on the data in each subcarrier included in the BWP1 to acquire a time-domain OFDM symbol. Specifically, the IFFT unit 112 converts the frequency-domain data assigned to each subcarrier into a time-domain signal to acquire an OFDM symbol.

The CP adding unit 113 adds a CP to the OFDM symbols of the BWP1 to generate a transmission signal of the BWP1. Further, as the IFFT unit 112 and the CP adding unit 113 are processing units that execute a process in the case of the wireless communication of the OFDM method as is the case with the CP removing units 102, 105 and the FFT units 103, 106 described above, they may be omitted when the wireless communication of other than the OFDM method is performed.

The BWP1 transmitting unit 114 transmits a transmission signal of the BWP1. Specifically, the BWP1 transmitting unit 114 transmits a transmission signal in the frequency band of the BWP1 included in the unlicensed carrier.

When the multiplexing unit 111 executes channel multiplexing of the data in the BWP2, the IFFT unit 115 performs the inverse fast Fourier transform on the data for each subcarrier included in the BWP2 to acquire a time-domain OFDM symbol. That is, the IFFT unit 115 converts the frequency-domain data assigned to each subcarrier into a time-domain signal to acquire an OFDM symbol.

The CP adding unit 116 adds a CP to the OFDM symbols of the BWP2 to generate a transmission signal of the BWP2. Further, as the IFFT unit 115 and the CP adding unit 116 are also processing units that execute a process in the case of the wireless communication of the OFDM method as is the case with the IFFT unit 112 and the CP adding unit 113 described above, they may be omitted when the wireless communication of other than the OFDM method is performed.

The BWP2 transmitting unit 117 transmits a transmission signal of the BWP2. Specifically, the BWP2 transmitting unit 117 transmits a transmission signal in the frequency band of the BWP2 included in the unlicensed carrier.

Next, a transmission method by the base station device 100 configured as described above is described with reference to the flowchart illustrated in FIG. 3.

When there is the data to be transmitted by the base station device 100, the LBT processing unit 108 executes LBT processing for each BWP (Step S101). Specifically, the received energy is detected in each of the BWP1 and the BWP2 in the cycle corresponding to each BWP, and it is determined whether the BWP1 and the BWP2 are busy or idle. Here, it is assumed that, for example, the BWP2 having a shorter symbol length has a shorter cycle of LBT processing. Therefore, the LBT processing unit 108 executes the LBT processing for the BWP2 more frequently as compared with the LBT processing for the BWP1.

After the LBT processing unit 108 executes the LBT processing, the BWP scheduling unit 109 determines whether the BWP1 is idle (Step S102). As a result of the determination, when the BWP1 is busy or the LBT processing for the BWP1 has not been executed (No at Step S102), it is determined whether the BWP2 is idle (Step S104). Further, when the BWP2 is busy (No at Step S104), it is difficult to transmit the data in both the BWP1 and the BWP2, and therefore the LBT processing is executed again in the subsequent cycle.

Conversely, when the BWP2 is idle even though the BWP1 is busy or the LBT processing for the BWP1 has not been executed (Yes at Step S104), the BWP scheduling unit 109 executes scheduling of the BWP2 (Step S107). Specifically, the assignment of data to a resource block included in the BWP2 is determined. In accordance with the result of the scheduling, the multiplexing unit 111 assigns the data to the BWP2.

When the BWP1 is idle as a result of the determination at Step S102 (Yes at Step S102), the BWP scheduling unit 109 continuously determines whether the BWP2 is idle (Step S103). Then, when the BWP2 is busy or the LBT processing for the BWP2 has not been executed (No at Step S103), only the BWP1 is idle, and therefore the scheduling of the BWP1 is executed (Step S105). Specifically, the assignment of data to a resource block included in the BWP1 is determined. In accordance with the result of the scheduling, the multiplexing unit 111 assigns the data to the BWP1.

Conversely, when both the BWP1 and the BWP2 are idle (Yes at Step S103), the BWP scheduling unit 109 performs scheduling of both the BWP1 and the BWP2 (Step S106). Specifically, the assignment of data to resource blocks included in the BWP1 and the BWP2 is determined. In accordance with the result of the scheduling, the multiplexing unit 111 assigns data to the BWP1 and the BWP2.

As described above, data is assigned only to the idle BWP when only any one of the BWP1 and the BWP2 is idle, and data is assigned to both of the BWPs when both the BWP1 and the BWP2 are idle. This makes it possible to efficiently use the vacant BWP and improve the throughput of data.

When only the BWP1 is idle and the scheduling of the BWP1 is performed, the control channel generating unit 110 generates the control information indicating the assignment of data in the BWP1 in accordance with the scheduling result. Then, the multiplexing unit 111 maps the control information to the BWP1 (Step S108).

Conversely, when both the BWP1 and the BWP2 are idle and the scheduling of the BWP1 and the BWP2 is performed, the control channel generating unit 110 generates the control information indicating the assignment of data in the BWP1 and the BWP2, and the multiplexing unit 111 maps the control information to the BWP2 (Step S109). That is, the control information on both the BWP1 and the BWP2 is mapped to the BWP2. This is because the transmission start timing of the BWP2 comes in the shortest cycle as the cycle of the LBT processing for the BWP2 is shortest and the transmission start timing of the BWP1 always overlaps with the transmission start timing of the BWP2. As the control information on the BWP1 and the BWP2 is mapped to the BWP2, the terminal device, which receives the data transmitted from the base station device 100, decodes the control channel of only the BWP2 so as to acquire the control information on both the BWP1 and the BWP2. As a result, it is possible to reduce the power consumption of the terminal device.

Furthermore, when only the BWP2 is idle and the scheduling of the BWP2 is executed, the control channel generating unit 110 generates the control information indicating the assignment of data in the BWP2 in accordance with the scheduling result. Then, the multiplexing unit 111 maps the control information to the BWP2 (Step S109).

When the transmission signal for each BWP, in which the data and the control information are mapped to the idle BWP, is generated as described above, the transmission signal is transmitted from the BWP1 transmitting unit 114 and the BWP2 transmitting unit 117 via the IFFT units 112, 115 and the CP adding units 113, 116 (Step S110). Specifically, the transmission signal of the BWP1 is transmitted from the BWP1 transmitting unit 114, and the transmission signal of the BWP2 is transmitted from the BWP2 transmitting unit 117. When both the BWP1 and the BWP2 are idle, the transmission signals transmitted from the BWP2 transmitting unit 117 include the control information on both the BWP1 and the BWP2.

Next, the transmission of data using the BWP1 and the BWP2 is described by using a specific example.

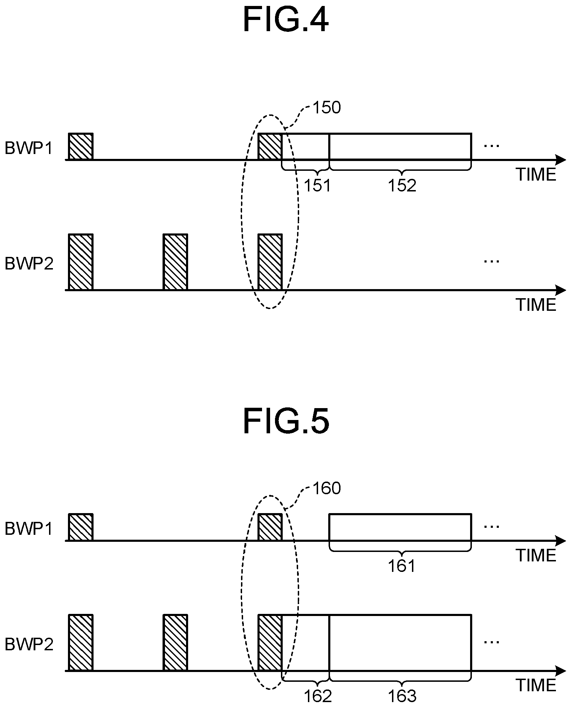

FIG. 4 is a diagram illustrating the usage situation of the BWPs when only the BWP1 is idle as a result of the LBT processing. As illustrated in FIG. 4, the LBT processing unit 108 executes LBT processing in the timing indicated by diagonal lines in each of the BWP1 and the BWP2. Here, the cycle of the LBT processing for the BWP2 is shorter than the cycle of the LBT processing for the BWP1. Further, the BWP2 is broader than the BWP1, and the subcarrier interval of the BWP2 is larger than the subcarrier interval of the BWP1. In other words, the symbol length of the BWP2 is shorter than the symbol length of the BWP1.

When both the BWP1 and the BWP2 are busy as a result of the LBT processing, no data is transmitted in any of the BWPs. Then, when it is determined that only the BWP1 is idle during the LBT processing in timing 150, the BWP1 is used to transmit the data. That is, control information 151 and data 152 are transmitted in the BWP1. The control information 151 includes the information indicating the assignment of the data 152.

FIG. 5 is a diagram illustrating a usage situation of the BWPs when both the BWP1 and the BWP2 are idle as a result of the LBT processing. As illustrated in FIG. 5, the LBT processing unit 108 executes LBT processing in the timing indicated by diagonal lines in each of the BWP1 and the BWP2. As in the example of FIG. 4, the cycle of the LBT processing for the BWP2 is shorter than the cycle of the LBT processing for the BWP1 in FIG. 5.

When both the BWP1 and the BWP2 are busy as a result of the LBT processing, no data is transmitted in any of the BWPs. Then, when it is determined that both the BWP1 and the BWP2 are idle during the LBT processing in timing 160, the BWP1 and the BWP2 are used to transmit the data. That is, data 161 is transmitted in the BWP1, and control information 162 and data 163 are transmitted in the BWP2.

The control information 162 transmitted by the use of the BWP2 includes the information indicating the assignment of the data 161 in the BWP1 and the information indicating the assignment of the data 163 in the BWP2. That is, the control information 162 in the BWP2, which has the shortest cycle of LBT processing, includes the control information on all the BWPs simultaneously used for the transmission. Accordingly, the terminal device, which receives the data in the BWP1 and the BWP2, decodes the control information on the BWP2 to determine the assignment of the data in the BWP1 and the BWP2 so as to properly decode the data addressed to the device.

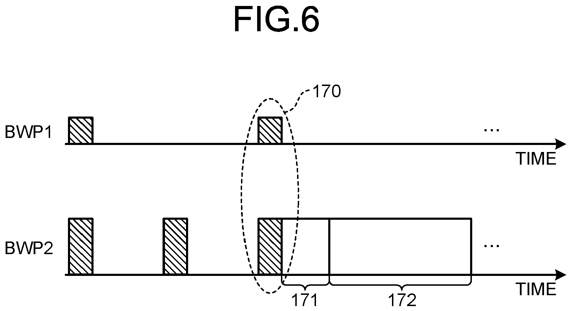

FIG. 6 is a diagram illustrating a usage situation of the BWPs when only the BWP2 is idle as a result of the LBT processing. As illustrated in FIG. 6, the LBT processing unit 108 executes LBT processing in the timing indicated by diagonal lines in each of the BWP1 and the BWP2. Here, the cycle of the LBT processing for the BWP2 is shorter than the cycle of the LBT processing for the BWP1.

When both the BWP1 and the BWP2 are busy as a result of the LBT processing, no data is transmitted in any of the BWPs. Then, when it is determined that only the BWP2 is idle during the LBT processing in timing 170, the BWP2 is used to transmit the data. That is, control information 171 and data 172 are transmitted in the BWP2. The control information 171 includes the information indicating the assignment of the data 172.

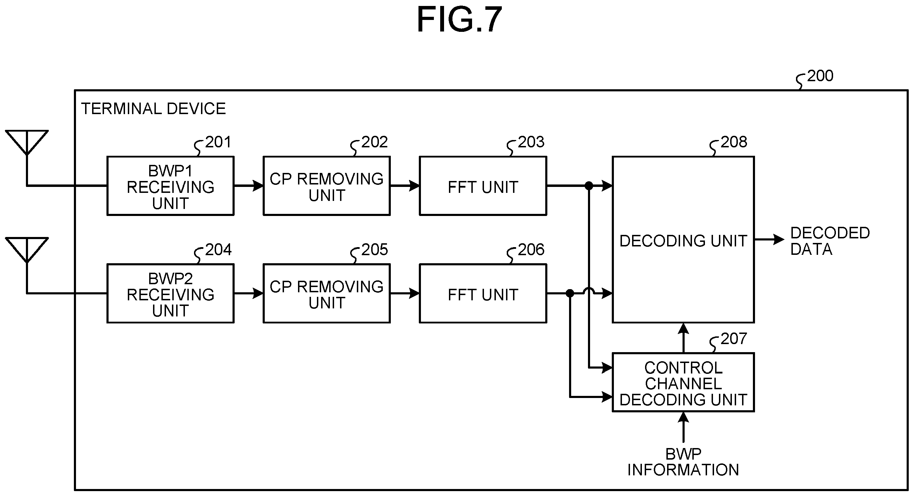

Next, the configuration of the terminal device that receives data in the BWP1 and the BWP2 is described. FIG. 7 is a block diagram illustrating a configuration of a terminal device 200 according to the first embodiment. The terminal device 200 illustrated in FIG. 7 includes BWP1 receiving units 201, 204, CP removing units 202, 205, FFT units 203, 206, a control channel decoding unit 207, and a decoding unit 208.

The BWP1 receiving unit 201 receives a signal of the BWP1. Specifically, the BWP1 receiving unit 201 receives a signal in the frequency band of the BWP1 included in the unlicensed carrier.

The CP removing unit 202 removes the CP added to the OFDM symbols from the received signal of the BWP1.

The FFT unit 203 performs fast Fourier transform on the received signal of the BWP1 to acquire multiple subcarrier signals having frequencies orthogonal to each other. Specifically, the FFT unit 203 converts a time-domain received signal into a frequency-domain signal to acquire subcarrier signals.

The BWP2 receiving unit 204 receives a signal of the BWP2. Specifically, the BWP2 receiving unit 204 receives a signal in the frequency band of the BWP2 included in the unlicensed carrier.

The CP removing unit 205 removes the CP added to the OFDM symbols from the received signal of the BWP2.

The FFT unit 206 performs fast Fourier transform on the received signal of the BWP2 to acquire multiple subcarrier signals having frequencies orthogonal to each other. Specifically, the FFT unit 206 converts a time-domain received signal into a frequency-domain signal to acquire subcarrier signals.

Furthermore, the CP removing units 202, 205 and the FFT units 203, 206 are also processing units that perform a process in the case of the wireless communication of the OFDM method as is the case with the CP removing units 102, 105 and the FFT units 103, 106 described above, they may be omitted when the wireless communication of other than the OFDM method is performed.

The control channel decoding unit 207 refers to the BWP information including information such as the frequency band of the BWP in the unlicensed carrier to decode control channels of the BWP1 and the BWP2. Here, the control channel decoding unit 207 first decodes the control channel of the BWP2 having the shortest cycle of the LBT processing. Then, when the control channel decoding unit 207 fails to decode the control channel of the BWP2, it decodes the control channel of the BWP1. That is, the control channel decoding unit 207 first decodes the control channel of the BWP having the shortest cycle of the LBT processing among the BWPs. When the data is transmitted by both the BWP1 and the BWP2, the control information on the two BWPs is transmitted by using the BWP2; therefore, the control channel of the BWP2 is first decoded so as to acquire the control information on the two BWPs. As a result, it is possible to reduce the consumed power that is consumed due to the decoding of the control channel.

The decoding unit 208 decodes the data in the BWP1 and the BWP2 based on the decoding result of the control channel obtained by the control channel decoding unit 207. That is, when the control channel decoding unit 207 has obtained the control information on the BWP1, the decoding unit 208 decodes the data in the BWP1. Further, when the control channel decoding unit 207 has obtained the control information on the BWP2, the decoding unit 208 decodes the data in the BWP2. Moreover, when the control information on both the BWP1 and the BWP2 has been obtained from the control channel of the BWP2, the decoding unit 208 decodes the data in both the BWP1 and the BWP2.

As described above, the terminal device 200 monitors the control channel of the BWP2, which has the shortest cycle of the LBT processing, based on the BWP information and attempts to first decode the control channel thereof. Then, when the decoding of the control channel fails, the decoding of the control channel of the BWP1 is attempted. Thus, it is possible to properly decode the data in the BWP1 and the BWP2 while reducing the consumed power that is consumed due to the decoding of the control channel.

As described above, according to the present embodiment, the base station device executes the individual LBT processing for each BWP and transmits data by using the idle BWP. Here, when multiple BWPs are idle, the data is transmitted by using the BWPs, and the control information on the BWPs is collectively transmitted by using the single BWP having the shortest cycle of the LBT processing. Further, the terminal device monitors the control channel of the single BWP having the shortest cycle of the LBT processing and, when the decoding of the control channel of the BWP fails, decodes the control channel of another BWP. Thus, it is possible to efficiently transmit the data by using the BWP that is determined to be vacant as a result of the LBT processing. In other words, a broadband carrier of the unlicensed band may be efficiently used. Moreover, the terminal device may reduce the consumed power that is consumed due to the decoding of the control channel.

Furthermore, in the description according to the above-described first embodiment, the BWP2 has the shortest cycle of the LBT processing; however, when the cycle of each BWP for the LBT processing is identical, the control information on all the BWPs may be transmitted by using one optionally selected BWP.

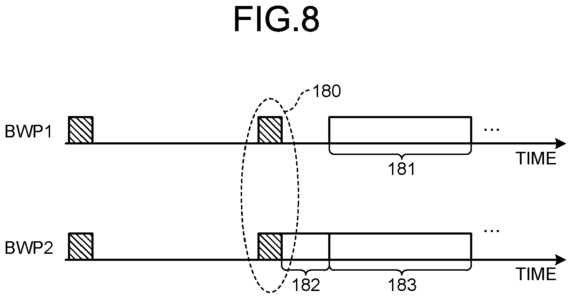

FIG. 8 is a diagram illustrating a usage situation of BWPs having the identical cycle of LBT processing. As illustrated in FIG. 8, the LBT processing is executed in the timing indicated by diagonal lines in each of the BWP1 and the BWP2. Here, the cycle of the LBT processing of the BWP1 is identical to the cycle of the LBT processing of the BWP2.

When both the BWP1 and the BWP2 are busy as a result of the LBT processing, no data is transmitted in any of the BWPs. Then, when it is determined that both the BWP1 and the BWP2 are idle during the LBT processing in timing 180, the BWP1 and the BWP2 are used to transmit the data. That is, data 181 is transmitted in the BWP1, and control information 182 and data 183 are transmitted in the BWP2.

Here, the information indicating the assignment of the data 181 in the BWP1 and the information indicating the assignment of the data 183 in the BWP2 are transmitted by using the BWP2 out of the BWP1 and the BWP2. However, as the cycles of LBT processing of the BWP1 and the BWP2 are identical, the control information on the two BWPs may be transmitted by using the BWP1.

### (Second Embodiment)

A second embodiment is characterized in that the single BWP is used as the BWP for simultaneously transmitting data to one terminal device and the BWP is switched as appropriate.

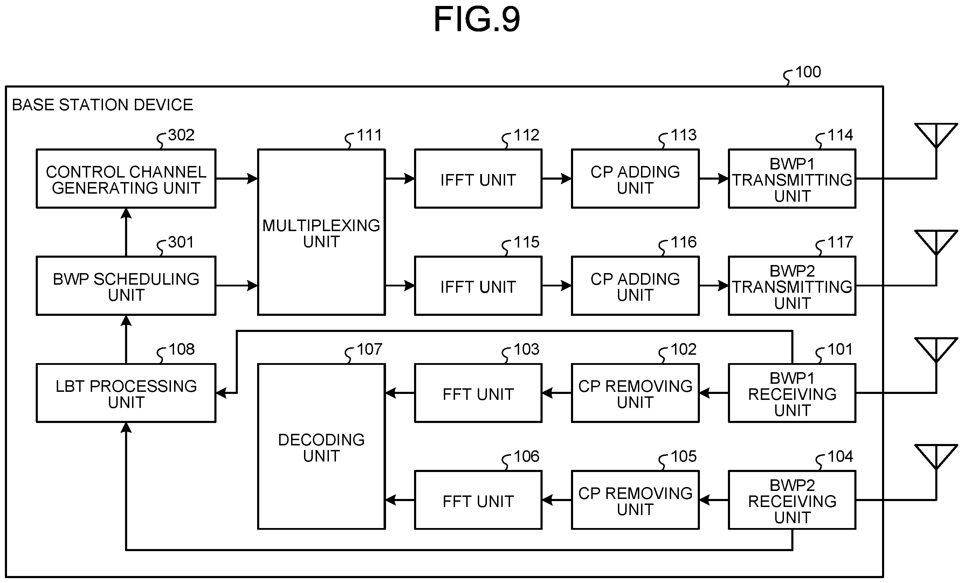

FIG. 9 is a block diagram illustrating a configuration of the base station device 100 according to the second embodiment. In FIG. 9, the same parts as those in FIG. 1 are denoted by the same reference numerals, and the description thereof is omitted. The base station device 100 illustrated in FIG. 9 includes a BWP scheduling unit 301 and a control channel generating unit 302 instead of the BWP scheduling unit 109 and the control channel generating unit 110 of the base station device 100 illustrated in FIG. 1.

The BWP scheduling unit 301 executes scheduling of any one of the BWP1 and the BWP2 based on the result of the LBT processing by the LBT processing unit 108. Specifically, the BWP scheduling unit 301 determines which one of the BWP1 and the BWP2 is to be used to transmit the data and, when it is determined that the determined BWP is idle, determines the data to be transmitted by the BWP. Here, the BWP scheduling unit 301 determines the BWP to be used for the transmission of the data based on the data amount of the data to be transmitted, the bandwidths of the BWP1 and the BWP2, etc.

Further, the BWP scheduling unit 301 switches the BWP to be used for the transmission of the data. Specifically, when the data is being transmitted by using the BWP1, for example, the BWP scheduling unit 301 determines that the switch is to be made to the BWP2 as appropriate and, after switching, determines the data to be transmitted by the BWP2. The BWP scheduling unit 301 determines whether the BWP is to be switched based on the data amount of the data to be transmitted, the usage situation of the resources in the BWP1 and the BWP2, the power consumption, etc.

Furthermore, as the BWP scheduling unit 301 determines that the data is transmitted by using the single BWP, the LBT processing unit 108 may perform the LBT processing on only the BWP determined by the BWP scheduling unit 301 according to the present embodiment. This makes it possible to reduce the processing load and the power consumption due to the LBT processing.

The control channel generating unit 302 generates the control information for identifying the data assigned to the BWP1 or the BWP2 in accordance with the scheduling result of the BWP scheduling unit 109. Specifically, when the scheduling of the BWP1 is executed, for example, the control channel generating unit 302 generates the control information indicating the destination terminal device of the data assigned to each resource block included in the BWP1. Further, when the scheduling of the BWP2 is executed, for example, the control channel generating unit 302 generates the control information indicating the destination terminal device of the data assigned to each resource block included in the BWP2. Further, when the BWP used for data transmission is switched, the control channel generating unit 302 generates the switching information for identifying the BWP that is a switching destination. That is, when the BWP used for the data transmission is switched from the BWP1 to the BWP2, for example, the control channel generating unit 302 generates the switching information indicating that the BWP used for the data transmission is to be switched to the BWP2. The switching information is transmitted by the control channel of the BWP1 that is being used to transmit the data before the switching.

Next, the data transmission selectively using the BWP1 and the BWP2 is described by giving a specific example.

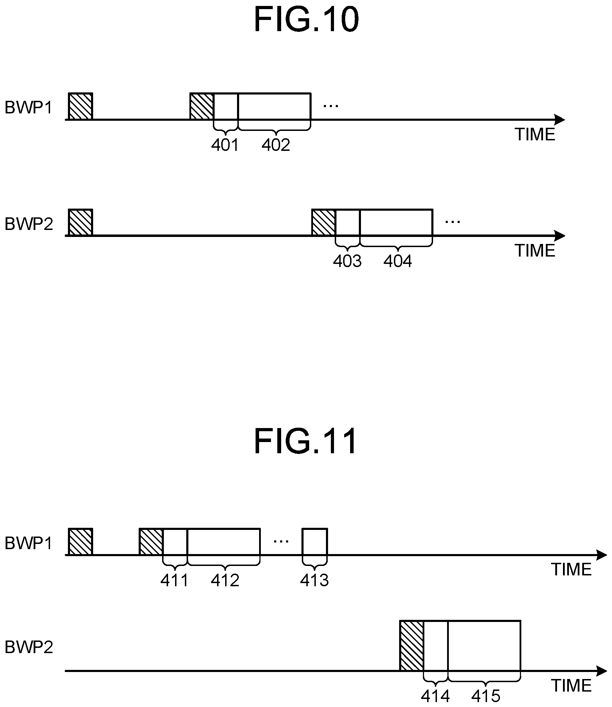

FIG. 10 is a diagram illustrating a usage situation of BWPs when the BWP used for the transmission of data is switched from the BWP1 to the BWP2. As illustrated in FIG. 10, when the BWP scheduling unit 301 determines that the BWP1 is to be used to transmit the data, the LBT processing unit 108 executes the LBT processing on the BWP1 in the timing indicated by diagonal lines.

When the BWP1 is busy as a result of the LBT processing, no data is transmitted in the BWP1. Then, when it is determined that the BWP1 is idle, control information 401 and data 402 are transmitted in the BWP1. At this point, when the BWP scheduling unit 301 has determined that the BWP used for the transmission of the data is to be switched from the BWP1 to the BWP2, the control information 401 includes the switching information indicating that the BWP1 is to be switched to the BWP2 so as to transmit the data.

The above-described transmission of the switching information allows the terminal device, which receives the data in the BWP1, to switch the reception target BWP from the BWP1 to the BWP2. Specifically, when the terminal device is notified that the data is transmitted by using the BWP1, the terminal device receives and decodes the signal of the BWP1 and, if the received signal of the BWP1 includes the switching information, switches the reception target BWP so as to receive the signal of the BWP2. Accordingly, there is no need to simultaneously use multiple BWPs as the reception targets; therefore, it is possible to use the BWP used to transmit the data as the reception target while reducing the power consumption of the terminal device.

After the control information 401 including the switching information is transmitted, the LBT processing unit 108 executes the LBT processing of the BWP2 after the switching in the timing indicated by diagonal lines. When the BWP2 is busy as a result of the LBT processing, no data is transmitted in the BWP2. Then, when it is determined that the BWP2 is idle, control information 403 and data 404 are transmitted in the BWP2. The control information 403 and the data 404 transmitted by using the BWP2 are received by the terminal device that has switched the reception target BWP to the BWP2 in advance in accordance with the switching information.

As described above, according to the present embodiment, the base station device determines the BWP to be used for data transmission, executes LBT processing on the determined BWP, and transmits the data when the BWP is idle. Further, the base station device determines that the BWP used for data transmission is to be switched as appropriate and transmits the switching information before switching the BWP. The terminal device uses the BWP used for data transmission as a reception target and, when the switching information is received, switches the reception target BWP. Thus, it is possible to transmit data while switching the BWP in accordance with a condition such as the amount of data or the power consumption. In other words, it is possible to efficiently use a broadband carrier of the unlicensed band.

Furthermore, the switching of the BWP described above in the second embodiment is also applicable during, for example, data retransmission. Specifically, when the retransmission of data is requested, the data may be retransmitted by using a BWP different from that in the initial transmission.

FIG. 11 is a diagram illustrating the use situation of the BWPs when the BWP is switched from the BWP1 to the BWP2 during the retransmission of data. As illustrated in FIG. 11, when the BWP scheduling unit 301 determines that the data is to be transmitted by using the BWP1, the LBT processing unit 108 executes LBT processing on the BWP1 in the timing indicated by diagonal lines.

When the BWP1 is busy as a result of the LBT processing, no data is transmitted in the BWP1. Then, when it is determined that the BWP1 is idle, control information 411 and data 412 are transmitted in the BWP1. Afterward, when the terminal device is not able to properly decode the data 412, the terminal device transmits a NACK for requesting the retransmission of the data to the base station device 100 in the BWP1.

After receiving the NACK, the base station device 100 transmits, continuously in the BWP1, control information 413 indicating that the BWP2 is to be used to retransmit the data. The control information 413 may include the information indicating the assignment of data retransmitted in the BWP2.

After the control information 413 is transmitted, the LBT processing unit 108 executes the LBT processing on the BWP2 in the timing indicated by diagonal lines. When it is determined that the BWP2 is idle as the result of the LBT processing, control information 414 and data 415 are transmitted in the BWP2. The control information 414 and the data 415 transmitted using the BWP2 are received by the terminal device that has switched the reception target BWP to the BWP2 in advance in accordance with the control information 413. Furthermore, the control information 414 may include the information indicating the assignment of the data retransmitted in the BWP2.

The above-described retransmission of data using a BWP different from that for the initial transmission makes it possible to obtain diversity gain in data retransmission.

Furthermore, the configurations of the base station device 100 and the terminal device 200 according to each of the above-described embodiments are merely examples, and the base station device and the terminal device do not always need to be configured as illustrated in FIGS. 1, 7, and 9. Specifically, the BWP1 receiving unit 101, the BWP2 receiving unit 104, the BWP1 transmitting unit 114, and the BWP2 transmitting unit 117 of the base station device 100 in FIGS. 1 and 9, for example, may be configured as one or a plurality of wireless units. Further, the other processing units of the base station device 100 in FIGS. 1 and 9 may be configured as one or a plurality of processors. Similarly, the BWP1 receiving unit 201 and the BWP2 receiving unit 204 of the terminal device 200 in FIG. 7 may be configured as one or a plurality of wireless units, and the other processing units may be configured as one or a plurality of processors. Here, for example, a CPU (Central Processing Unit), an MPU (Micro Processing Unit), an ASIC (Application Specific Integrated Circuit), an FPGA (Field Programmable Gate Array), a DSP (Digital Signal Processor), or the like, may be used as the processor.

### Reference Signs List

- 101, 201: BWP1 RECEIVING UNIT
- 102, 105, 202, 205: CP REMOVING UNIT
- 103, 106, 203, 206: FFT UNIT
- 104, 204: BWP2 RECEIVING UNIT
- 107, 208: DECODING UNIT
- 108: LBT PROCESSING UNIT
- 109, 301: BWP SCHEDULING UNIT
- 110, 302: CONTROL CHANNEL GENERATING UNIT
- 111: MULTIPLEXING UNIT
- 112, 115: IFFT UNIT
- 113, 116: CP ADDING UNIT
- 114: BWP1 TRANSMITTING UNIT
- 117: BWP2 TRANSMITTING UNIT
- 207 CONTROL: CHANNEL DECODING UNIT

## Claims

1. A base station device included in a wireless communication system using a frequency band that does not need a license, the base station device comprising:
a determining unit configured to determine whether each of bandwidth parts is being used by another wireless communication system, the bandwidth parts included in a carrier belonging to the frequency band and having frequencies different from each other;
a scheduling unit configured to assign data to a bandwidth part that is determined by the determining unit to be not being used by the other wireless communication system; and
a transmitting unit configured to transmit a signal of the bandwidth part to which the data is assigned by the scheduling unit.

2. The base station device according to claim 1, wherein the scheduling unit assigns, when a plurality of bandwidth parts are determined by the determining unit to be not being used by the other wireless communication system, the data to each of the bandwidth parts.

3. The base station device according to claim 2, wherein the transmitting unit uses any one of the bandwidth parts to transmit control information indicating assignment of the data to each of the bandwidth parts, when the data is assigned to each of the bandwidth parts by the scheduling unit.

4. The base station device according to claim 3, wherein the transmitting unit transmits the control information by using a bandwidth part for which the determining unit makes a determination in a shortest cycle, among the bandwidth parts.

5. The base station device according to claim 1, wherein the scheduling unit determines a single bandwidth part to be used for a wireless communication and, when the single bandwidth part is determined by the determining unit to be not being used by the other wireless communication system, assigns the data to the single bandwidth part.

6. The base station device according to claim 5, wherein the scheduling unit determines that a bandwidth part used for a wireless communication is to be switched from the single bandwidth part to another bandwidth part and, after switching, assigns the data to the other bandwidth part.

7. The base station device according to claim 6, wherein the scheduling unit determines that the bandwidth part used for a wireless communication is to be switched when data retransmission is requested.

8. A terminal device included in a wireless communication system using a frequency band that does not need a license, the terminal device comprising:
a receiving unit configured to receive signals of a plurality of bandwidth parts included in a carrier belonging to the frequency band and having frequencies different from each other;
a control information decoding unit configured to decode control information included in a signal of one bandwidth part among the signals of the bandwidth parts received by the receiving unit and indicating assignment of data to each of the bandwidth parts; and
a decoding unit configured to decode the signals of the bandwidth parts received by the receiving unit based on the control information decoded by the control information decoding unit.

9. The terminal device according to claim 8, wherein the control information decoding unit decodes, when decoding of the control information included in the signal of the one bandwidth part fails, control information included in a signal of another bandwidth part.

10. A wireless communication system comprising a base station device and a terminal device to perform a wireless communication by using a frequency band that does not need a license,
the base station device includes:
a determining unit configured to determine whether each of bandwidth parts is being used by another wireless communication system, the bandwidth parts included in a carrier belonging to the frequency band and having frequencies different from each other;
a scheduling unit configured to assign data to a bandwidth part that is determined by the determining unit to be not being used by the other wireless communication system; and
a transmitting unit configured to transmit a signal of the bandwidth part to which the data is assigned by the scheduling unit, and
the terminal device includes:
a receiving unit configured to receive signals of the bandwidth parts included in the carrier belonging to the frequency band and having frequencies different from each other;
a control information decoding unit configured to decode control information included in a signal of one bandwidth part received by the receiving unit and indicating assignment of data to each of the bandwidth parts; and
a decoding unit configured to decode the signals of the bandwidth parts received by the receiving unit based on the control information decoded by the control information decoding unit.

11. A transmission method implemented in a wireless communication system using a frequency band that does not need a license, the transmission method comprising:
determining whether each of bandwidth parts is being used by another wireless communication system, the bandwidth parts included in a carrier belonging to the frequency band and having frequencies different from each other;
executing scheduling to assign data to a bandwidth part that is determined to be not being used by the other wireless communication system; and
transmitting a signal of the bandwidth part to which the data is assigned.
